# EUROPEAN PATENT SPECIFICATION

(11) **EP 3 953 532 B1**
(45) Date of publication and mention of the grant of the patent: **20.03.2024**
(21) Application number: 20721113.7
(22) Date of filing: 01.04.2020
(51) Int. Cl.: F16L 37/23, F16L 37/32, F16L 37/56

(54) **IMPROVED HYDRAULIC CONNECTION ASSEMBLY WITH ELECTRO-ACTUATED CARTRIDGES**
VERBESSERTE HYDRAULISCHE VERBINDUNGSANORDNUNG MIT ELEKTROBETÄTIGTEN KARTUSCHEN
ENSEMBLE RACCORD HYDRAULIQUE AMÉLIORÉ À CARTOUCHES ÉLECTRO-ACTIONNÉES

(30) Priority: 08.04.2019 IT 201900005330; 06.11.2019 IT 201900020454
(43) Date of publication of application: 16.02.2022
(73) Proprietor: FASTER S.r.l., 26027 Rivolta d'Adda (IT)
(72) Inventor: RUSCONI, Paolo, 26027 Rivolta d'Adda (CR) (IT); ARRIGONI, Riccardo, 26027 Rivolta d'Adda (CR) (IT)
(74) Representative: Lualdi, Lorenzo
(86) International application number: PCT/IB2020/053090
(87) International publication number: WO 2020/208480

(56) References cited:
- EP-A1- 2 515 015
- EP-A1- 2 700 853
- EP-A1- 3 232 759
- EP-A1- 3 244 114
- WO-A1-2015/067793
- US-B2- 7 861 642

## Description

### FIELD OF THE INVENTION

The present invention relates to a hydraulic connection assembly mainly for agricultural applications comprising a block, also known as manifold, i.e. a casting generally in cast iron or similar material, which houses a plurality of female quick couplings, also called cartridges, which are inserted within said manifold and are suitable for establishing the hydraulic connection between the existing hydraulic circuit on board the operating machine (e.g. a tractor in the case of agricultural applications) and the hydraulic circuit of removable hydraulic equipment to which the complementary male quick coupling is connected.

### STATE OF THE ART

Hydraulic assemblies of the type to which the present invention refers, suitable for connecting the on-board hydraulic circuit of an operating machine with the hydraulic circuit of removable hydraulic equipment, are known from the state of the art, see for instance EP 3 244 114 A1.

In general, the manifold is mounted at the rear part of the vehicle and connected to the hydraulic unit of the latter, and makes the hydraulic power necessary for operating the equipment that is connected to the tractor, available to the user.

In order to hydraulically connect the hydraulic circuit of the machine to the users apparatus, the operator connects the male couplers connected to the hydraulic tubing of the rear tool to the cartridges inserted in the casting, one for supply, the other for oil return. Once the male couplers have been connected to the female cartridges, the operator can start the hydraulic unit on the machine and then supply (through the casting and relative cartridges) power to the hydraulic motor of the apparatus, in terms of flow-rate and pressure.

The known manifolds of the state of the art comprise a mechanical lever useful for zeroing the residual oil pressure in the circuit and for mechanically releasing the male coupler from the female cartridge in order to disconnect the utilizer apparatus.

The systems of the known type of the state of the art therefore provide that the manifold, which incorporates a pair of female cartridges, be equipped with this lever that can be actuated by the user and configured for actuating both cartridges simultaneously, allowing the simultaneous mechanical release of the two male couplers of the hydraulic line, through a unilateral movement of the lever, or for actuating one cartridge at a time, through a bilateral movement of the lever.

The second type is considered preferable, for an easier manual management by the operator.

These systems of the known type, however, are not free from drawbacks.

In particular, the need for having to manually actuate the lever for the connection and disconnection of the male couplers from the female cartridges necessarily implies that the user must get off the machine and operate the lever of the manifold whenever he has to decompress or release the utilizer apparatus from the machine itself.

As already mentioned, the manifold is generally positioned at the rear of the machine, sometimes even in positions that are difficult to reach, and is very often subject to the accumulation of dirt, such as mud and dust.

In particular, the lever can be difficult to reach and operate for the user.

In addition, actuating the lever to disconnect the utilizer apparatus is not always easy in itself, and sometimes requires some physical force, especially when the residual pressure in the circuit is high.

Furthermore, a further drawback that afflicts systems with a manually actuated manifold of a known type lies in the fact that the user has to carry out an uncomfortable maneuver in the decompression and disengagement phases since he has to grab the male coupler with one hand and operate the lever for decompression/disengagement with the other hand.

This is perceived as a drawback by the user, who, as he has to work for many hours with the machine, requires increasingly higher levels of comfort both on the machine and in the decompression/ disengagement operations of the utilizer apparatus.

### SUMMARY OF THE INVENTION

In light of the above, the aim of the present invention is to provide a hydraulic connection assembly of the type comprising a manifold for housing a plurality of cartridges, which allows the drawbacks affecting hydraulic connection assemblies of the type known from the state of the art, to be solved.

Within this aim, the objective of the present invention is to provide a hydraulic connection assembly which is easier for the operator to use in the decompression and disengagement phases of the male couplers on the utilizer apparatus side to/from the female cartridges of the manifold assembled on the machine, and in general in the hooking phases of the utilizer apparatus to the machine.

The above-mentioned aim, as also the objectives indicated and others which will become clearer hereinafter, are achieved by a hydraulic connection assembly according to the enclosed claim 1.

Other characteristics of the hydraulic connection assembly for pressurized fluids according to the present invention are provided in the dependent claims, which also form an integral part of the present description.

### LIST OF FIGURES

Further characteristics and advantages will become clearer from the description of preferred but non-exclusive embodiments of the hydraulic assembly for connecting hydraulic lines for pressurized fluids according to the present invention, illustrated as a non-limiting example with the aid of the attached drawings, in which:
- figure 1 shows an overall view of a connection assembly according to the present invention according to a first embodiment;
- figures 1A and 1B show the same view as figure 1 in which the movement of the actuators for actuating the actuation means of the cartridges is exemplified;
- figure 2 shows a detailed view of the actuators of the connection assembly according to the first embodiment shown in figures 1, 1A and 1B;
- figure 3 shows an overall view of a connection assembly according to the present invention according to a second embodiment;
- figure 4 illustrates a construction detail of the actuators of the connection assembly according to the present invention according to the embodiment of figure 3;
- figure 4A illustrates an overall view of a connection assembly according to the present invention according to a third embodiment;
- figure 4B illustrates a construction detail of the actuators of the connection assembly according to the embodiment of figure 4A;
- figure 5A shows a sectional view of the manifold comprising the cartridges of the connection assembly according to the present invention according to the first embodiment shown in figures 1 and 2, in a rest condition of the cartridges;
- figure 5B shows a detailed view of one of the cartridges of the manifold of figure 5A in the rest condition;
- figure 6A shows the same sectional view of the manifold of figure 5A in a condition for releasing the residual pressure from a first cartridge;
- figure 6B shows a detailed view of the first cartridge of figure 6A in the pressure-release condition;
- figure 7A shows the same sectional view of the manifold of figure 1 in a release condition of the mechanical retaining balls which allow the disconnection of the first cartridge from the male coupler;
- figure 7B shows a detailed view of the first cartridge in the release condition of the mechanical retaining balls of figure 7A;
- figure 8A shows the same sectional view of the manifold of figure 1 in a condition for releasing the residual pressure from a second cartridge;
- figure 8B shows a detailed view of the second cartridge in the release condition of the mechanical retaining balls of figure 8A;
- figure 9A shows the same sectional view of the manifold of figure 1 in a release condition of the mechanical retaining balls which allow the disconnection of the male coupler from the second cartridge;
- figure 9B shows a detailed view of the second cartridge in the release condition of the mechanical retaining balls of figure 9A;
- figure 10 shows an overall perspective view of a connection assembly according to the present invention according to a further embodiment comprising an RFID reader/transmitter;
- figure 11 shows a schematic view of a male coupler of a utilizer apparatus provided with a passive RFID Tag;
- figure 12 shows a block diagram that schematically illustrates the exchange of information between the electro-actuated manifold and the male coupler in the embodiment which provides for the presence of an RFID transmitter and RFID tag;
- figures 13 and 14 schematically illustrate a possible functioning of the hydraulic assembly according to the present invention equipped with a data exchange system based on the use of the RFID technology.

### DETAILED DESCRIPTION OF THE INVENTION

With particular reference to the attached figures, the hydraulic connection assembly **10** for the connection of hydraulic lines **20**, **30** for pressurized fluids according to the present invention, comprises a manifold **1** in which housing seats are obtained, configured for accommodating female cartridges **2, 3.**

More specifically, with reference to the embodiments shown in the attached figures, the manifold **1** comprises two seats for housing the same number of cartridges **2, 3.**

The hydraulic assembly **10,** object of the present invention, is in fact advantageously intended for use in the agricultural field for connecting the hydraulic supply and return lines of the hydraulic circuit on the machine to a utilizer apparatus.

Each of said cartridges **2, 3** comprises, according to what is known from the state of the art, a main body **22** which comprises a rear internal body **22a** which houses valve means **23** for releasing the hydraulic pressure located in the rear area of the cartridge, and housing seats **24, 25** for receiving the retaining balls of the male coupler, not shown in the figures, positioned in the front area of the cartridge.

The hydraulic connection assembly **10** according to the present invention further comprises actuation means for the cartridges **4** comprising control means **7** outside the manifold **1** and a rocker lever **5,** positioned inside the manifold **1,** hinged in a central fulcrum **6** and having two arms **5a, 5b** substantially having the same length, moved by said control means **7** outside the manifold **1.**

The hydraulic assembly **10** according to the present invention further comprises electro-actuated actuators **11** for actuating said actuation means of the cartridges **4,** i.e. for decompressing the hydraulic lines **20, 30** through the cartridges **2, 3** and allowing the connection/disconnection of the cartridges **2, 3** with/from the corresponding male couplers, not shown.

More specifically, with reference to the embodiments shown in the attached figures, the manifold **1** according to the present invention advantageously comprises a first cartridge **2** positioned on a first hydraulic line **20,** and a second cartridge **3** positioned on a second hydraulic line **30.**

Each of said first **2** and second **3** cartridges comprises pressure-release means comprising said valve means **23** which are opened when pressed by a spacer **21, 31** suitably provided behind each of said cartridges **2, 3** in correspondence with the valve means **23, 33** of each of the same and which is pushed by said rocker lever **5** in abutment with said valve means **23, 33.**

More specifically, each of said arms **5a, 5b** interacts with a corresponding spacer **21, 31** suitably provided at the rear of each of said cartridges **2, 3** in correspondence with the valve means **23, 33.**

According to a first preferred embodiment of the present invention shown in the attached figures, the actuation means of the cartridges **4** described above are actuated by electro-actuated means **11** which in turn comprise an electromechanical actuator **12** in turn controlled by a unit of control.

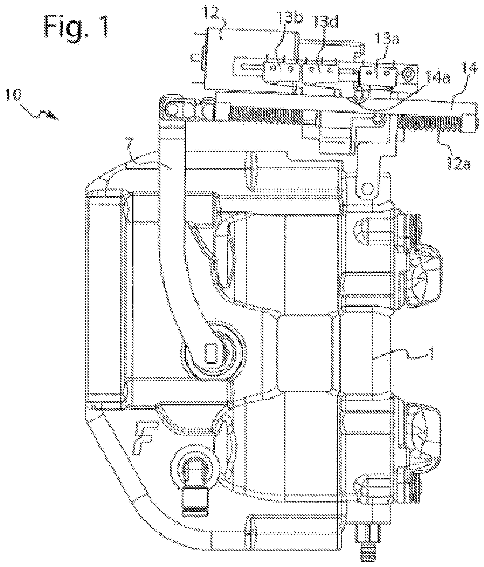

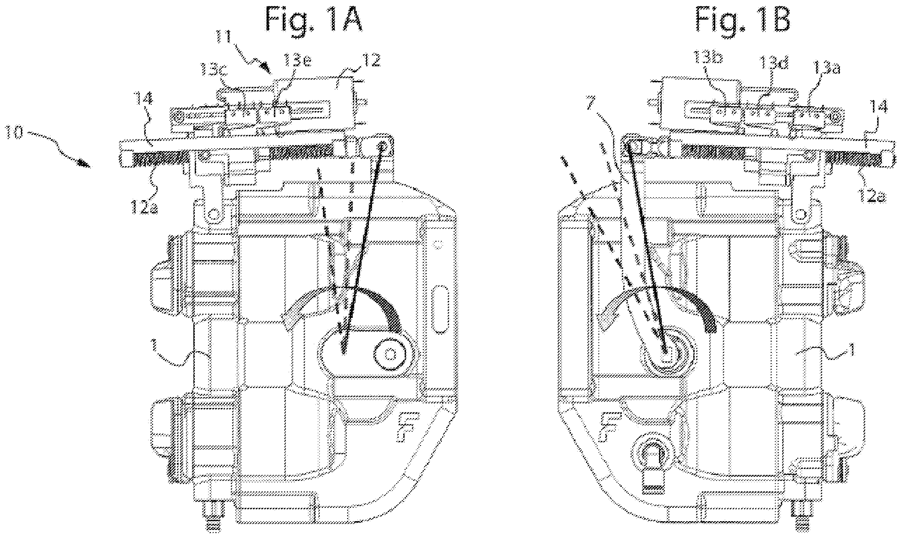

According to what is visible in particular in figures 1A and 1B, said electro-actuated means **11** can advantageously comprise a linear electromechanical actuator **12,** preferably with a horizontal axis, which moves a lever **7** in turn connected with said central fulcrum **6** so as to selectively move a first **5a,** or a second **5b** arm of said rocker lever **5.**

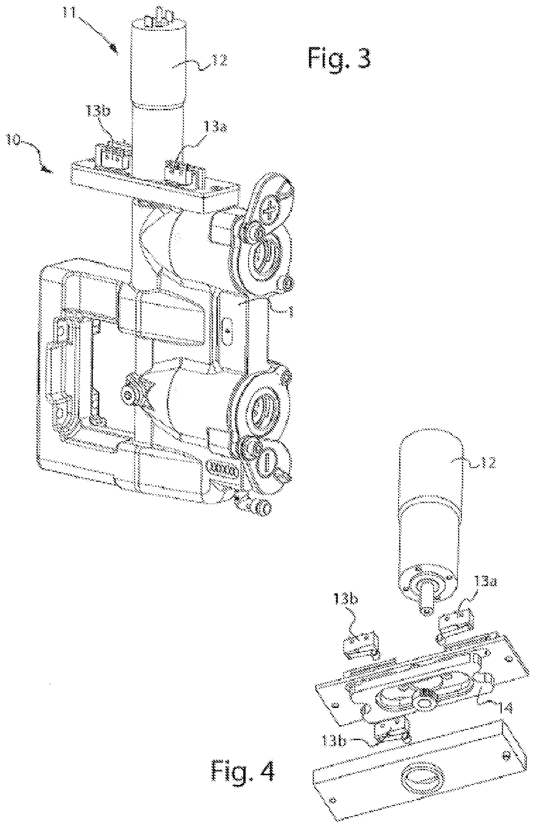

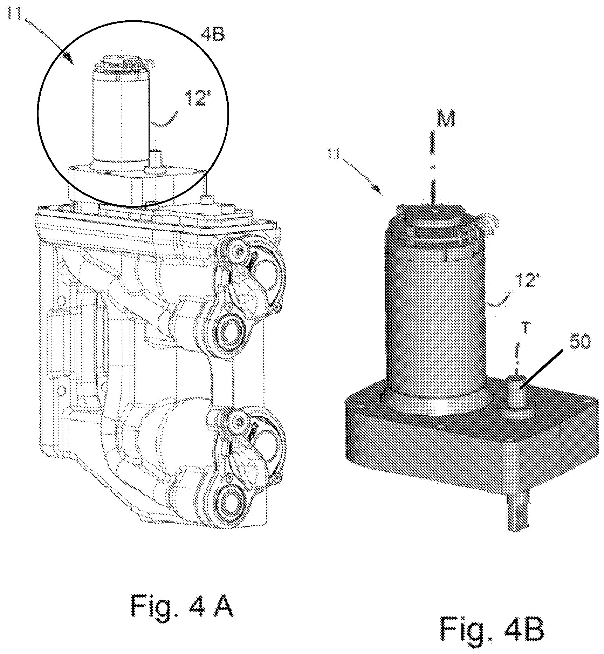

With particular reference to the second preferred embodiment of the present invention shown by way of example in figures 3 and 4, said electro-actuated actuators **11** can advantageously comprise an electromechanical actuator **12** with a vertical axis.

Said electro-actuated actuators **11** are advantageously inserted in a protective casing resistant to infiltrations of atmospheric agents, dirt and, preferably, water, and also resistant to impact, or contact with external objects.

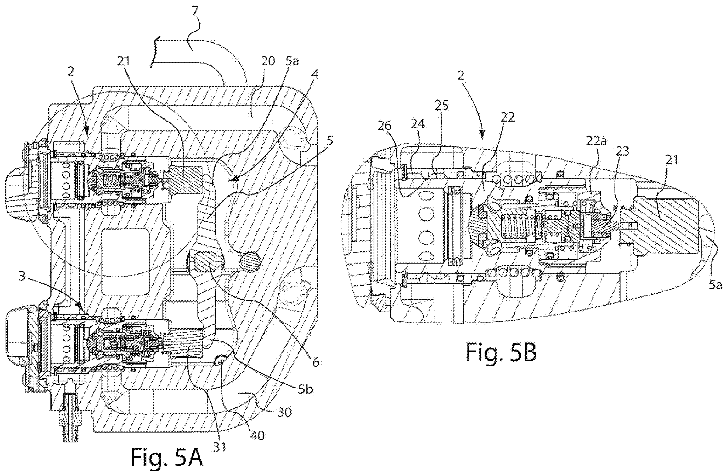

The functioning of the hydraulic connection assembly **10** according to the present invention will now be described with particular reference to figures 5A to 9B.

Figure 5A shows an overall view of the hydraulic assembly **10** according to the present invention in a rest condition, in which the actuation means of the cartridges **4,** and in particular the rocker lever **5,** are in a neutral rest position wherein the arms **5a, 5b** of the rocker lever **5** do not interact with the spacers **21, 31** provided at the rear of said cartridges **2, 3,** and the valve means **23, 33** are not activated for opening.

In this rest position, the electro-actuated actuators **11** are also in a rest position.

With particular reference to figure 5B, in this rest position, the first cartridge **2** is situated inside the manifold **1** in a retracted position, so that the retaining balls, not shown, for coupling the male coupler, are blocked in place by the abutment **26** provided on the internal surface of the main body **22** of the cartridge **2.**

In the rest configuration, the second cartridge **3** is also in the same rest position as described above for the first cartridge **2.**

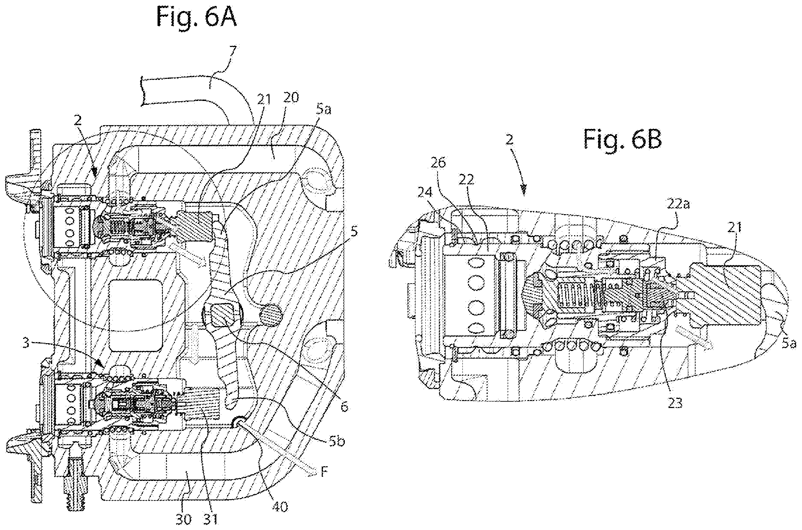

With particular reference to figure 6A, the condition in which said first cartridge **2** is actuated in decompression is described hereunder.

By actuating said electro-actuated actuators **11** which, for example, move the external lever **7,** operationally connected to said central fulcrum **6,** towards the front area of the manifold **1,** the actuation means **4** of the cartridges will move said rocker lever **5** so that the first arm **5a** of said rocker lever **5** pushes the first spacer **21** against the valve means **23** of said first cartridge **2,** causing the release of the pressure present in the first line which is discharged outwardly through the opening **40.**

The path of the pressurized fluid is indicated by the arrows **F** in figure 6A.

As can be seen from figure 6A, when the actuation means **4** of the cartridges actuate the first cartridge **2** in decompression, the second cartridge **3** is still in the rest condition described above.

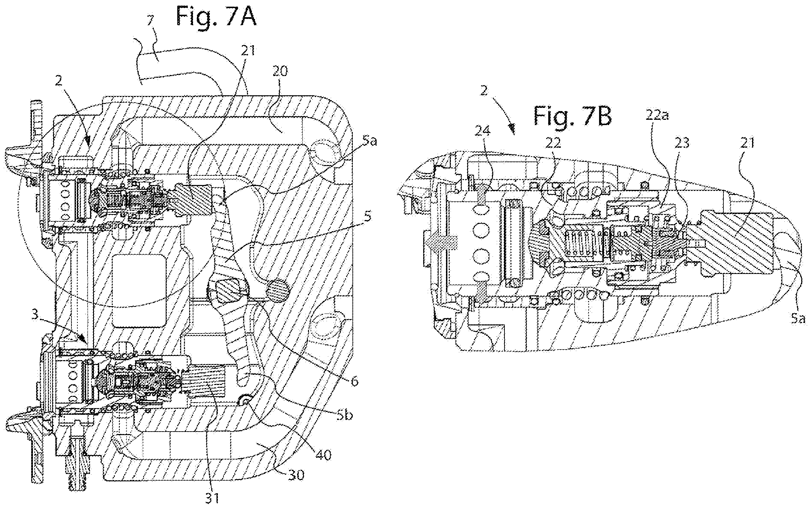

Turning now to figure 7A, a further run of said electro-actuated actuators **11** will involve the movement of the actuation means **4** of the cartridges towards a second actuation position in which the rocker lever **5** is further rotated around the central fulcrum **6** in the direction which involves a further thrust of the spacer **21** towards the valve means **23.** This further run of the spacer **21** involves the movement towards the front area of the manifold **1,** of the main body **22** of the cartridge **2,** so that the coupling balls of the male coupler can expand radially in correspondence with the receiving seat **24** thus allowing the release of the male coupler from the female cartridge **2.**

The alignment of the main body **22** of the cartridge **2** with respect to the receiving seat **24** formed in correspondence with the internal surface of the main body **22** is shown in particular in figure 7B.

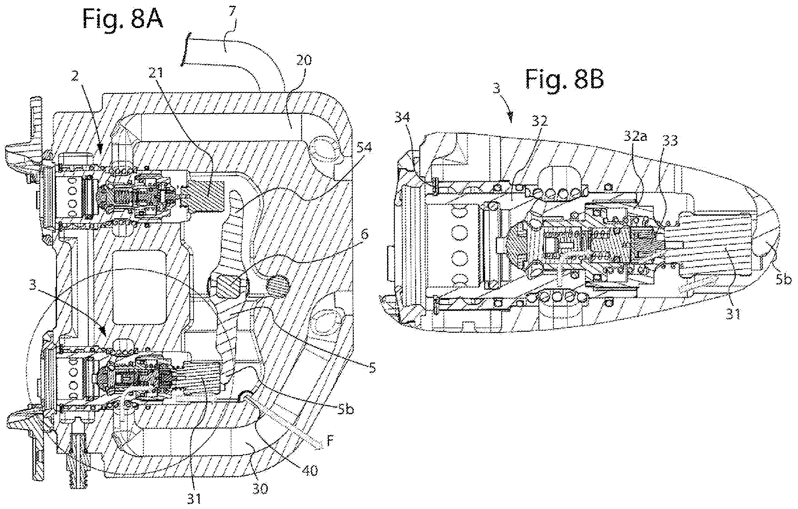

Figures 8A and 8B respectively show the movement of the rocker lever **5** which, with the second arm **5b,** pushes the second spacer **31** in abutment against the valve means **33** of the second cartridge **3,** housed in the rear internal body **32a** of the main body **32** of said second cartridge **3,** causing the decompression of the second hydraulic line **30,** and a detail of the second cartridge **3** in which the valve means **33** are open.

The electro-actuated actuators **11** therefore move the actuation means **4** of the cartridges, in particular the rocker lever **5,** preferably moved by the external lever **7,** in the opposite direction to that described above with reference to figures 6A and 7A which showed the actuation, first in decompression and then in the release and ejection of the male coupler, of the first cartridge **2.**

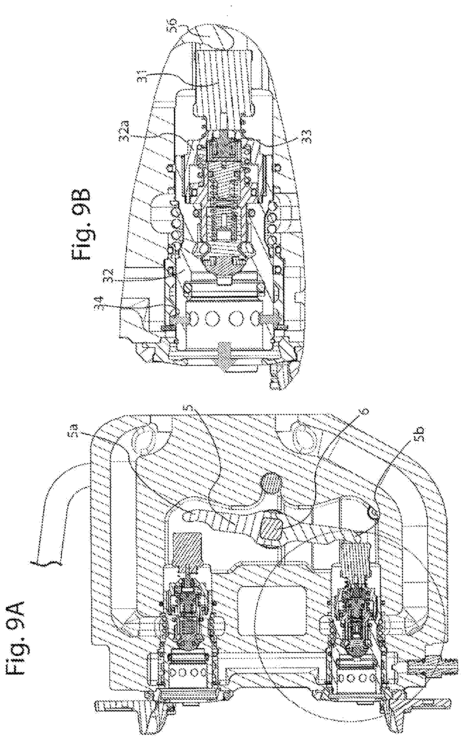

Continuing in their run, the actuation means **4** of the cartridges, moved by the electro-actuated actuators **11,** cause the release and expulsion of the male coupler from the cartridge **3,** according to what can be seen in figures 9A and 9B, bringing the receiving seat **34** of the retaining balls of the male coupler in correspondence with the latter so that the coupling balls of the male coupler can expand radially allowing disconnection.

According to what has been described so far, therefore, the electro-actuated actuators **11** move said actuation means **4** of the cartridges between a rest position in which the cartridges **2, 3** are in the configuration suitable for withholding the corresponding male couplers, a first actuation position in which said actuation means **4** of the cartridges actuate at least one decompression valve **21, 31** provided on each of said cartridges **2, 3** causing the decompression of the corresponding hydraulic line **20, 30,** and a second actuation position in which said actuation means **4** of the cartridges release the mechanical connection of at least one of said cartridges **2, 3** from the corresponding male coupler.

According to a preferred embodiment of the present invention, the electro-actuated actuators **11** advantageously further comprise a control unit and an electromechanical actuator **12,** controlled by said control unit, for actuating the actuation means of the cartridges **4.**

Said control unit of said electro-actuated actuators **11** is preferably operationally connected with one or more microswitches **13** suitable for detecting the position of said electromechanical actuator **12** and/or the actuation run of said actuation means of the cartridges **4.**

Said electro-actuated actuators **11** are preferably operationally connected to control means operated by the user, which can consist of, for example, an electric push-button.

More specifically, said user-operated control means of said electro-actuated actuators **11** can comprise one or more electric push-buttons positioned on the machine or directly on the manifold and operated by the user.

If said electro-actuated actuators **11** comprise, in operative connection with said control unit, a single run-end for each of said cartridges **2, 3,** said actuation means of the cartridges **4** simultaneously actuate the decompression and mechanical release of the cartridge.

Alternatively, the electro-actuated actuators **11** comprise, particularly on said electromechanical actuator **12** in operative connection with said control unit, a double run-end for each of said cartridges **2, 3,** so that said actuation means **4** of the cartridges actuate the decompression of the hydraulic lines with a first partial run, and the mechanical release of the cartridge with a second overall run.

By way of example, the electromechanical actuator **12** can comprise a DC motor with linear drive by means of, for example, a trapezoidal screw **12a** actuated by a rotating threaded bush; a position-control system, in turn preferably comprising a first microswitch **13a** integral with the motor body for central positioning corresponding to the rest condition of the cartridges.

In a preferred embodiment of the present invention in which the actuator **12** is equipped with a single run-end for each cartridge, a second microswitch **13b** integral with the motor body for the forward run-end is provided for detecting a run-end position corresponding to the decompression and release condition of the first cartridge **2,** and a third microswitch **13c** integral with the motor body for the reverse run-end is provided for detecting a run-end position corresponding to the decompression and release condition of the second cartridge **3.**

In an alternative embodiment of the present invention, the actuator **12** is equipped with a single double run-end for each cartridge. In this case, along the forward run of the actuator **12,** in addition to said second microswitch **13b,** a fourth microswitch **13d** is further provided, so that said fourth microswitch **13d** detects the intermediate run corresponding to the decompression condition of the first cartridge **2,** and said second microswitch **13b** detects the run-end condition corresponding to the release condition of the first cartridge **2.**

In the same way, a fifth microswitch **13e** may be present in the case of an actuator **12** equipped with a double run-end for the actuation of the second cartridge **3** for the intermediate run-end in decompression of the second cartridge **3,** in addition to said third microswitch **13c** for the run-end provided for detecting a run-end position corresponding to the release condition of the second cartridge **3.**

The actuation slots **14a** of the microswitches **13a, 13b, 13c, 13d** and **13e** are advantageously provided on a slide **14** translating with the trapezoidal screw **12a.**

According to what is shown by way of example in figure 1, in this embodiment wherein the electro-actuated actuators **11** comprise a DC motor with a linearly actuated slide, the microswitches **13a, 13b, 13c, 13d** and **13e** are therefore advantageously actuated through the relative movement of the slide **14,** equipped with slots **14a,** with respect to the microswitches themselves.

The slots **14a,** directly facing the contact points of the microswitches, open and close the contacts, controlling the actuation and shutdown of the electromechanical actuator **12** in correspondence with the starting and arrival points of the mechanical system.

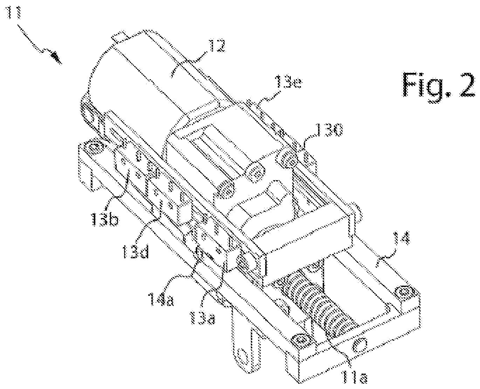

With particular reference to figures 2 and 3, these show an alternative embodiment with a vertical-axis actuator **12.** In this case, the rotary motion of the actuated shaft of the actuator **12** must be transformed into the translational motion of the slide. The transformation of the rotary motion of the shaft into the translational motion of the slide 14 can be carried out in various ways, with kinematic mechanisms of the known type, for example with a pinion integral with the shaft and a rack integral with the slide, with a pulley that moves a belt, with a pinion that moves a chain and so forth.

As an alternative to a direct current motor, the actuator **12** of the hydraulic assembly with electro-actuated cartridges **10** according to the present invention can comprise a stepper motor with an electronic control system with programming of the functions, or a direct current motor with an encoder installed, used by electronics for position control.

According to a preferred embodiment schematically illustrated in figures 4A and 4B, the electro-actuated actuators **11** can advantageously comprise a direct current motor **12'** with an encoder and electronic control, in this case avoiding the need for installing run-end sensors such as the microswitches described above with reference to the embodiment of figure 4.

Again with reference to figures 4A and 4B, the actuators **11** according to this preferred embodiment of the invention can advantageously comprise an electric motor **12'** powered by direct current and advantageously arranged with its own motor axis **M** parallel to a connection shaft **50** which is connected to said actuation means **4** of the cartridges of the hydraulic assembly so that the rotary motion of the connection shaft **50,** actuated by the motor axis **M** of the motor **12'** by means of the encoder controlled by the control electronics, can operate the decompression of the hydraulic lines with a first partial run, and, with a second overall run, the mechanical release of the cartridges **2, 3,** independently acting on each cartridge.

Assuming that the cartridges **2, 3** identify a substantially horizontal direction, with reference to the figures, the motor axis **M** of the motor **12'** is advantageously arranged in a substantially vertical direction, and the connection shaft **50** is also arranged with its axis **T** vertical and parallel to the motor axis **M.**

Motion-transmission means, not illustrated as they can be produced according to numerous variations within the reach of skilled persons in the field, are advantageously provided between the motor axis **M of** the motor **12'** and the connection shaft **50** for transmitting the motion from the motor shaft **M** to connection shaft **50.**

There are therefore many possible alternatives available to skilled persons in the field for implementing the electro-actuated actuators **11** which move the actuation means **4** of the cartridges of the hydraulic assembly **10** according to the present invention.

Furthermore, the hydraulic assembly **10** for pressurized fluids according to the present invention comprises electro-actuated actuators **11** which can be operationally connected to control means actuated by the user.

In a preferred embodiment of the present invention, said control means actuated by the user for controlling the electro-actuated actuators **11** comprise one or more push-buttons, preferably two push-buttons for each block, or casting, i.e. one push-button for each cartridge, positioned on the machine or directly on manifold **1.**

When said actuators **11** comprise an actuator **12** with a double run-end, said push-buttons can comprise timed relays so that a short pressure of said one or more push-buttons causes the reduced run-end of said actuators **11** and the decompression alone of the cartridges **2, 3,** and a prolonged pressure of the push-button causes the total run-end of said actuators **11** and the mechanical release of the cartridges **2, 3.**

In the state of the art, the user can forcibly insert the male coupler into the cartridge without operating the actuator. In this case, however, the operator must exert considerable force as he has to move the retaining balls to the housing seat provided on the cartridge, overcoming the preload of the spring.

The spring preload is generally high, as it is calibrated according to the high operating pressures characteristic of the applications in question. Consequently, the physical effort that the operator must exert for connecting the coupler to the cartridge is, as already mentioned, high.

According to the embodiment of the invention described above, however, the operator can press the push-button with a prolonged pressure to cause both the decompression and the release of the cartridge, at this point he can insert the male coupler and the operation is facilitated by the system that opens the retaining balls by overcoming the spring preload.

In the same way, in order to disconnect the male coupler, the operator must press the push-button for a long time in order to decompress and release the cartridge, wait for the male coupler to be ejected and release the push-button.

Furthermore, according to an alternative embodiment of the hydraulic assembly 10 according to the present invention, a proximity sensor, produced for example by means of a further specific microswitch which is closed when the male coupler is inserted in the manifold, can allow the cartridges to be automatically decompressed and released, without the operator having to manually press the decompression/release button of the cartridges.

According to this preferred embodiment, when the male coupler is inserted into the manifold, the contact of the specific microswitch is closed and said electro-actuated actuators **11** move the actuation means **4** of the cartridges causing the decompression and opening of the retaining balls of the relative cartridge. The operator can then insert the male coupler into the corresponding cartridge by opening the contact again and closing the cartridge.

For the release and expulsion of the male coupler, the operator must preferably press the push-button for a long time. In this way, an accidental and undesired pressing of the push-button by the operator prevents an undesired release of the connection. The operator can therefore press the push-button and, for example, if he realizes that he has pressed the push-button by mistake, if he releases it after a short period, the engagement is not disconnected.

Again, according to a further alternative embodiment of the hydraulic assembly **10** according to the present invention, the specific microswitch which allows the automatic decompression and opening of the cartridge, can advantageously be associated with the closure cap of the seat of each cartridge, said cap usually being provided on the manifold for closing the cartridges.

In this case, the opening of the cap causes the closure of the specific microswitch and the decompression and opening of the cartridge, the operator proceeds with inserting the male coupler which opens the contact again causing the closure of the cartridge.

When opening, the operator must press a specific push-button advantageously provided on the cap itself, causing the contact to close and therefore the decompression and opening of the cartridge, the subsequent expulsion of the male coupler and the consequent automatic opening of the contact and the closure of the cartridge.

Again, according to a further alternative embodiment of the hydraulic assembly **10** according to the present invention, the actuators **11** which control the actuation means of the cartridges **4** can advantageously be controlled remotely using a wireless connection, for example by providing a push-button in the cabin with a transmitter that remotely controls the specific contact that sends the command to the actuators **11** for the decompression and release of the cartridges, as described above.

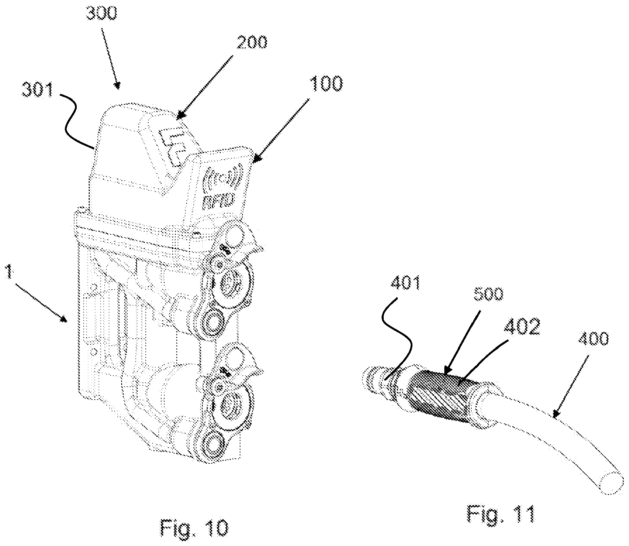

With particular reference to figures 10 to 14, a further preferred embodiment of the present invention will now be described wherein the actuators **11** which control the actuation means **4** of the cartridges **2, 3** are automatically actuated by means of a recognition system of the correct coupling of a male coupler with the relative cartridge, said system comprising at least one RFID reader/transmitter, or NFC, or the like.

More specifically, with particular reference to figures 10 and 11, an RFID reader/transmitter (Radio Frequency Identification) is associated with the block or manifold **1,** indicated as a whole with the reference number **100** in figure 10.

Again with reference to the preferred embodiment illustrated in figure 10, the RFID reader/transmitter is advantageously positioned above the manifold **1** itself inside a housing **300** which protects the components of the RFID element itself, and which can advantageously also house the control electronics (generally indicated by the reference number **200**) of the motor **12,** which is preferably, even if not necessarily, a DC motor with an encoder according to the embodiment illustrated by way of example in figures 4A and 4B.

According to a preferred embodiment of the present invention, the housing **300** can comprise a cover **301** made of plastic material or in any case made of a suitable material (i.e. which does not obstruct the passage of radio waves) to allow the passage of radio waves used for the transmission of data from RFID elements.

The cover **301** can also be made of metallic material, in order to ensure greater protection for the components positioned in the housing **300,** and in this case the cover **301** can include a window to allow the passage of the radio frequency signal or it can be completely closed, without windows in a material suitable for the passage of the radio signal, but equipped with an antenna.

With particular reference to figure 11, an RFID tag **500,** i.e. an element of the passive type, is associated with the male coupler **401** destined for being inserted in one of the cartridges **2, 3** of the manifold **1** or at the end of the hydraulic tube **400,** preferably in correspondence with a special handle **402** often provided on said hydraulic tube **400** for facilitating the gripping and insertion of the male coupler **401** into the corresponding cartridge **2, 3** by the operator.

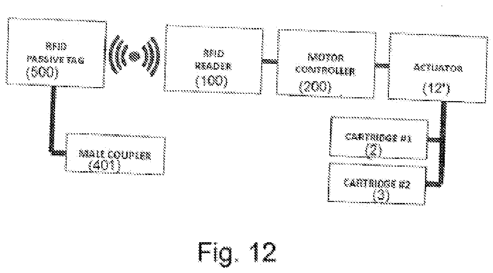

With particular reference to figures 12, 13 and 14, the functioning of the automatic coupling recognition system and the correct positioning/association of the coupling **401** to one of the cartridges **2, 3** of manifold **1** is illustrated hereunder.

In an automatically actuated system in which the recognition of the connection, i.e. the recognition of the correct seat for inserting the coupling **401** that the operator moves towards the manifold **1,** takes place as described by means of RFID/NFC sensors that effect the reading of the passive RFID Tag present on the male coupler **401,** or, as already indicated, on the handle **402** or on another part of the tube **400.**

The reading of the information carried by the passive Tag **500** present on the male coupler can take place in the following ways:
RFID technology allows the recognition of Tags in contact (or at a short distance, e.g. with the NFC technology), or at a finite distance (from 50 to 500 mm, e.g. with the UHF RAIN technology.

Passive tags can be previously programmed univocally, through a specific hardware and software system or through an application (App) that can also be shared with the end user.

The Tag therefore carries a unique encoding, and this encoding can be associated with a specific function, or with specific characteristics, of the male coupler on which the same Tag is installed.

RFID recognition therefore allows a signal to be provided of a correct or incorrect combination between the cartridge **2, 3** of the casting and the male coupler **401** on the attachment or hydraulic line **400.**

Many other features, however, can be achieved thanks to the RFID technology.

In addition to the correct/incorrect combination when the final operator moves the male coupler **401** towards the right/wrong cartridge **2, 3,** which can be manifested for example by the lighting of the corresponding warning LED lights (green/red colour on each opening/release button of the cartridge, or simply by the lighting/flashing of a led of any colour of the opening/release button relating to the correct cartridge), the RFID radio frequency technology can also allow for example:
- the actuation of the electronic control of the actuator **12** when the male coupler is moved towards the correct cartridge, which is actuated causing the opening of the cartridge relating to the correct connection, in order to facilitate the insertion of the male coupler itself, thus obtaining two advantages: on the one hand, the cartridge relating to the incorrect connection will not be activated/opened and therefore the user, in addition to any visual signal, will be physically unable to insert the male coupler into the wrong cartridge), on the other hand, the opening of the cartridge relating to the correct connection facilitates the insertion of the male coupler, improving the ergonomics of the connection, as the thrust force that the operator must exert in order to insert the male coupler into the female cartridge is significantly reduced;
   - the RFID signal transmitted by the Tag (male coupling) to the reader (manifold/cartridge) can also transmit to the operating machine on which the manifold **1** is mounted, information about the type and characteristics of the utilizer apparatus connected to the coupling **401** which is about to be connected, and consequently information on the power needed for moving it, thus being able to reduce the unnecessary power (fuel saving), and/or receive information concerning the conditions of the utilizer apparatus itself, thus being able to predict any possible scheduled maintenance operations (predictive maintenance).

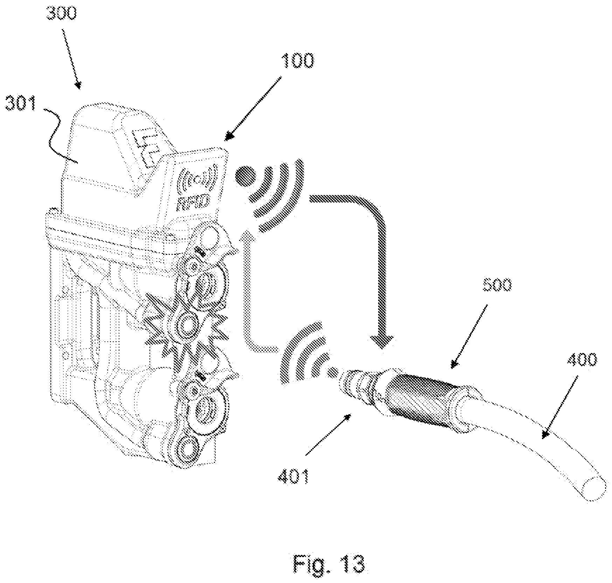

Numerous variations and combinations of what has been described so far can be conceived by skilled persons in the field. With reference to figure 13, for example, a fully automatic functioning method of the RFID recognition system is illustrated in which, when the operator moves the male coupler with a passive Tag towards the block or manifold equipped with an RFID reader/transmitter, the LED is automatically switched on illuminating the push-button relating to the correct cartridge in which the coupling is to be inserted, or a green LED will light up in correspondence with the correct cartridge, if more than one LED colour (red and green) is provided.

At this point, according to the block diagram of figure 12, the RFID on the manifold can communicate with the control electronics **200** of the actuator **12** and automatically open the cartridge to allow easier insertion of the male coupler into the correct cartridge.

According to what is illustrated in figure 13, the release/opening button which in any case is present to allow disengagement of the male coupler from the cartridge, can light up (of any color if the push-button is provided for lighting up in correspondence with the correct cartridge, or green if LEDs of different colors are provided, for example green and red), to indicate to the operator the correct cartridge in which the male coupler is to be inserted.

According to a fully automatic operating mode, the control electronics will directly actuate the actuator **12** and open the correct cartridge, whereas according to a semi-automatic operating mode, the last opening step of the correct cartridge can be operated by the user who is required to press the push-button corresponding to the correct cartridge to be opened, which has been previously illuminated (or is green, if red and green LEDs are provided).

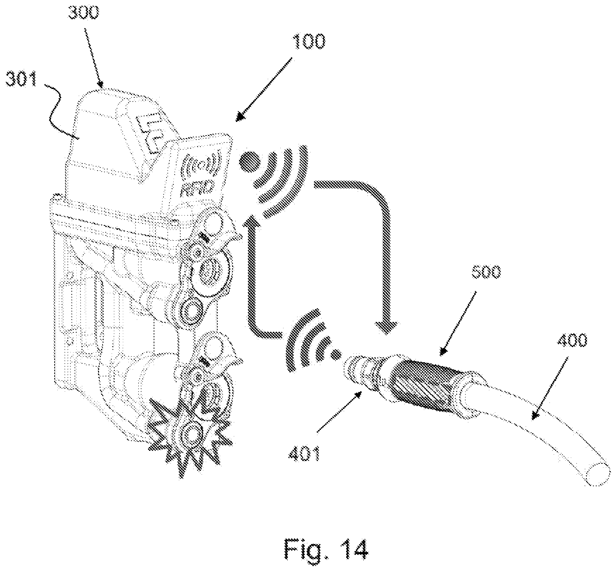

With reference to figure 14, the approach towards the manifold **1,** of a male coupler **401** that carries a Tag that univocally identifies it as suitable for being correctly associated with the other cartridge, will cause the same opening/actuation sequence of the second cartridge.

Even when the hydraulic connection assembly according to the present invention is equipped with an automatic recognition and actuation system by means of RFID as described so far, for safety reasons, the disengagement phase which allows the removal of the coupling from the cartridges will preferably always require that the operator press the block/open button corresponding to the cartridge from which the male coupler is to be disengaged.

The hydraulic connection assembly for the connection of hydraulic lines of pressurized fluids equipped with electro-actuated cartridges according to the present invention allows the aim to be accomplished and the objectives set by the invention itself, to be achieved.

The present invention has been described, for illustrative but non-limiting purposes, according to preferred embodiments, but it should be understood that variations and/or modifications can be applied by skilled persons in the field, without thereby departing from the relative protection scope, as defined in the enclosed claims.

## Claims

1. A hydraulic connection assembly (10) for connecting hydraulic lines (20,30) for pressurised fluids, of the type comprising a manifold (1) which houses, in corresponding seats, a plurality of female cartridges (2,3) and comprising actuation means (4) of the cartridges configured for selectively decompressing the hydraulic lines (20,30) and connecting/disconnecting said cartridges (2,3) to/from corresponding male couplers (401) provided on the utilizer apparatus to be hydraulically connected to said assembly (10), **characterized in that** it comprises electro-actuated actuators (11) for actuating said actuation means (4) of the cartridges for decompressing the hydraulic lines (20, 30), wherein said electro-actuated actuators (11) move said actuation means (4) of the cartridges between a rest position in which the cartridges (2,3) are in the configuration suitable for retaining the corresponding male couplers, a first actuation position in which said actuation means (4) of the cartridges actuate at least one decompression valve (21,31) provided on each of said cartridges (2,3), causing the decompression of the corresponding hydraulic line (20,30), and a second actuation position in which said actuation means (4) of the cartridges release the mechanical connection of at least one of said cartridges (2,3) from the corresponding male coupler, so as to facilitate the connection and disconnection operation of said cartridges (2,3) to/from corresponding male couplers (401), said electro-actuated actuators (11) being operationally connected to a control unit and further comprising an electromechanical actuator (12) controlled by said control unit.

2. The hydraulic connection assembly (10) according to the preceding claim, **characterized in that** said control unit of said electro-actuated actuators (11) is operationally connected with one or more microswitches (13) suitable for controlling the position of said electromechanical actuator (12) and/or actuation run of said actuation means (4) of the cartridges.

3. The hydraulic connection assembly (10) according to one or more of the previous claims, **characterized in that** said electro-actuated actuators (11) are operationally connected to control means that can be actuated by the user.

4. The hydraulic connection assembly (10) according to one or more of the previous claims, **characterized in that** said electro-actuated actuators (11) comprise, in operational connection with said control unit, a single run-end for each of said cartridges (2,3) so that said actuation means (4) of the cartridges simultaneously actuate the decompression and mechanical release of the cartridge.

5. The hydraulic connection assembly (10) according to one or more of the previous claims, **characterized in that** said electro-actuated actuators (11) comprise, in operational connection with said control unit, a double run-end for each of said cartridges (2,3) so that said actuation means (4) of the cartridges actuate, with a first run, the decompression of the hydraulic lines, and with a second run, the mechanical release of the cartridge.

6. The hydraulic connection assembly (10) according to claims 4 or 5, **characterized in that** said run-ends comprise one or more microswitches (13a,13b,13c,13d,13e).

7. The hydraulic connection assembly (10) according to claim 4 or any one of claims 5 to 6 when dependent on claim 4, **characterized in that** said control means actuated by the user of said electro-actuated actuators (11) comprise one or more push-buttons positioned on the machine or directly on the manifold (1).

8. The hydraulic connection assembly (10) according to claim 4 or any one of claims 5 to 7 when dependent on claim 4, **characterized in that** said control means actuated by the user further comprise one or more push-buttons or timed relays so that a short pressure of said one or more push-buttons causes the reduced run of said actuators (11) and the decompression alone of the cartridges (2,3), a prolonged pressure of the push-button causes the total run of said actuators (11) and the mechanical release of the cartridges (2,3).

9. The hydraulic connection assembly (10) according to claim 1, **characterized in that** said electro-actuated actuators (11) comprise a stepper motor whose running is controlled by an electronic control system, or a motor (12') in direct current with an encoder installed.

10. The hydraulic connection assembly (10) according to the previous claim, **characterized in that** said direct current motor (12') equipped with an encoder is arranged with its own motor axis (M) parallel to a connection shaft (50) which is in turn mechanically connected to said actuation means (4) of the cartridges (2,3) so that the rotary motion of the connection shaft (50), driven by the motor axis (M) of the direct current motor (12') by means of the encoder controlled by the control electronics, actuates with a first partial run, the decompression of the hydraulic lines, and with a second overall run, the mechanical release of the cartridges (2,3), acting on each cartridge independently of each other.

11. The hydraulic connection assembly (10) according to the previous claim, **characterized in that** said motor axis (M) of the direct current motor (12') is arranged along a substantially vertical direction, and said connection shaft (50) is also arranged with its own axis (T) vertical and parallel to the motor axis (M).

12. The hydraulic connection assembly (10) according to one or more of the previous claims, **characterized in that** it comprises an electrical contact or a proximity sensor positioned in correspondence with the inlet end of the cartridge and configured for detecting the presence of the male coupler near the female cartridge and automatically decompressing and releasing the cartridges, without the operator having to manually press the decompression/release button of the cartridges.

13. The hydraulic connection assembly (10) according to one or more of the previous claims, **characterized in that** said actuators (11) that control the actuation means (4) of the cartridges are remotely controlled by a wireless connection through a push-button positioned in the cabin or at another point far from the manifold.

14. The hydraulic connection assembly (10) according to one or more of the previous claims, **characterized in that** said actuators (11) that control the actuation means (4) of the cartridges (2,3) are automatically actuated by means of a recognition system of the correct coupling of a male coupler (401) with the relative cartridge (2,3) comprising at least one radio frequency reader/transmitter, such as RFID, NFC, or the like.

15. The hydraulic connection assembly (10) according to the previous claim, **characterized in that** it comprises an RFID reader/transmitter (100) associated with said manifold (1) and suitable for detecting the presence of an RFID tag (500) associated with a male coupler (401) or an element of the hydraulic line (400) with which said male coupler (401) is associated.

16. The hydraulic connection assembly (10) according to the previous claim, **characterized in that** said RFID reader/transmitter (100) is in data communication with the control electronics (200) of the actuator (12,12') of said electro-actuated actuators (11).

17. The hydraulic connection assembly (10) according to the previous claim, **characterized in that** said RFID reader/transmitter (100) is in data communication with the control electronics (200) of said DC motor (12') with an encoder.

18. The hydraulic connection assembly (10) according to one or more of claims 15 to 18, **characterized in that** said passive Tag (500) contains information concerning the male coupler (401) and/or the utilizer apparatus connected to the hydraulic line (400) with which said coupling (401) is associated.

19. The hydraulic connection assembly (10) according to the previous claim, wherein said RFID reader/transmitter is positioned above the manifold (1) itself inside a housing (300).

20. A method for the control of a hydraulic connection assembly (10) according to one or more of claims 14 to 19 comprising the following steps:
- sending a radio frequency signal from said RFID reader/transmitter (100);
- when a passive RFID Tag (500) associated with a coupling (401) or with the hydraulic line (400) with which said coupling (401) is associated, is detected and read by the RFID reader/transmitter (100), communicating from said RFID reader/transmitter (100) to the control electronics (200) of the actuator (12') of said electro-actuated actuators (11), the opening of the cartridge (2,3) with which the operator must couple the coupling (401) supporting said passive RFID Tag (500).

21. The method according to the previous claim, further comprising a transmission step of the information stored in the passive RFID Tag (500) from said RFID reader/transmitter (100) to a control unit of the hydraulic unit of the operating machine with which said hydraulic connection assembly (10) is associated.

## Patentansprüche

1. Hydraulische Verbindungsbaugruppe (10) zum Verbinden von Hydraulikleitungen (20, 30) für unter Druck stehende Fluide, von der Art, die einen Verteiler (1) umfasst, der in entsprechenden Sitzen eine Vielzahl von weiblichen Patronen (2, 3) aufnimmt und Betätigungsmittel (4) der Patronen umfasst, die so konfiguriert sind, dass sie selektiv die Hydraulikleitungen (20; 30) dekomprimieren und die Patronen (2, 3) mit/von entsprechenden männlichen Kupplungen (401) verbinden/trennen, die an der Benutzervorrichtung vorgesehen sind, um hydraulisch mit der Anordnung (10) verbunden zu werden, **dadurch gekennzeichnet, dass** sie elektrobetätigte Aktuatoren (11) zum Betätigen der Betätigungsmittel (4) der Patronen zum Dekomprimieren der Hydraulikleitungen (20, 30) umfasst, wobei die elektrobetätigten Aktuatoren (11) die Betätigungsmittel (4) der Patronen zwischen einer Ruheposition, in der sich die Patronen (2, 3) in der Konfiguration befinden, die zum Halten der entsprechenden männlichen Kupplungen geeignet ist, und einer ersten Betätigungsposition, in der die Betätigungsmittel (4) der Patronen mindestens ein Dekompressionsventil (21, 31) betätigen, das an jeder der Patronen (2, 3) vorgesehen ist und die Dekompression der entsprechenden Hydraulikleitung (20, 30) bewirkt, und einer zweiten Betätigungsposition, in der die Betätigungsmittel (4) der Patronen die mechanische Verbindung von mindestens einer der Patronen (2, 3) mit dem entsprechenden männlichen Verbinder lösen, bewegen, um den Verbindungs- und Trennungsvorgang der Patronen (2, 3) mit/von dem entsprechenden männlichen Verbinder (401) zu erleichtern, wobei die elektrobetätigten Aktuatoren (11) mit einer Steuereinheit wirkverbunden sind und ferner einen elektromechanischen Aktuator (12) umfassen, der durch die Steuereinheit gesteuert wird.

2. Hydraulische Verbindungsbaugruppe (10) nach dem vorstehenden Anspruch, **dadurch gekennzeichnet, dass** die Steuereinheit der elektrobetätigten Aktuatoren (11) mit einem oder mehreren Mikroschaltern (13) wirkverbunden ist, die geeignet sind, die Position des elektromechanischen Aktuators (12) und/oder den Betätigungslauf der Betätigungsmittel (4) der Patronen zu steuern.

3. Hydraulische Verbindungsbaugruppe (10) nach einem oder mehreren der vorstehenden Ansprüche, **dadurch gekennzeichnet, dass** die elektrobetätigten Aktuatoren (11) mit Steuermitteln wirkverbunden sind, die vom Benutzer betätigt werden können.

4. Hydraulische Verbindungsbaugruppe (10) nach einem oder mehreren der vorstehenden Ansprüche, **dadurch gekennzeichnet, dass** die elektrobetätigten Aktuatoren (11) in Wirkverbindung mit der Steuereinheit ein einzelnes Laufende für jede der Patronen (2, 3) umfassen, so dass die Betätigungsmittel (4) der Patronen gleichzeitig die Dekompression und die mechanische Freigabe der Patrone betätigen.

5. Hydraulische Verbindungsbaugruppe (10) nach einem oder mehreren der vorstehenden Ansprüche, **dadurch gekennzeichnet, dass** die elektrobetätigten Aktuatoren (11) in Wirkverbindung mit der Steuereinheit ein doppeltes Laufende für jede der Patronen (2, 3) umfassen, so dass die Betätigungsmittel (4) der Patronen mit einem ersten Lauf die Dekompression der Hydraulikleitungen und mit einem zweiten Lauf die mechanische Freigabe der Patrone betätigen.

6. Hydraulische Verbindungsbaugruppe (10) nach Anspruch 4 oder 5, **dadurch gekennzeichnet, dass** die Laufenden einen oder mehrere Mikroschalter (13a, 13b, 13c, 13d, 13e) umfassen.

7. Hydraulische Verbindungsbaugruppe (10) nach Anspruch 4 oder nach einem der Ansprüche 5 bis 6, wenn abhängig von Anspruch 4,
**dadurch gekennzeichnet, dass** die vom Benutzer der elektrobetätigten Aktuatoren (11) betätigten Steuermittel einen oder mehrere Druckknöpfe umfassen, die auf der Maschine oder direkt auf dem Verteiler (1) angeordnet sind.

8. Hydraulische Verbindungsbaugruppe (10) nach Anspruch 4 oder nach einem der Ansprüche 5 bis 7, wenn abhängig von Anspruch 4,
**dadurch gekennzeichnet, dass** die vom Benutzer betätigten Steuermittel ferner einen oder mehrere Druckknöpfe oder Zeitrelais umfassen, so dass ein kurzer Druck auf den einen oder die mehreren Druckknöpfe den reduzierten Lauf der Aktuatoren (11) und nur die Dekompression der Patronen (2, 3) bewirkt, während ein längerer Druck auf den Druckknopf den vollständigen Lauf der Aktuatoren (11) und die mechanische Freigabe der Patronen (2, 3) bewirkt.

9. Hydraulische Verbindungsbaugruppe (10) nach Anspruch 1, **dadurch gekennzeichnet, dass** die elektrobetätigten Aktuatoren (11) einen Schrittmotor umfassen, dessen Betrieb durch ein elektronisches Steuersystem oder einen Gleichstrommotor (12') mit eingebautem Encoder gesteuert wird.

10. Hydraulische Verbindungsbaugruppe (10) nach dem vorstehenden Anspruch, **dadurch gekennzeichnet, dass** der mit einem Encoder ausgestattete Gleichstrommotor (12') mit seiner eigenen Motorachse (M) parallel zu einer Verbindungswelle (50) angeordnet ist, die ihrerseits mechanisch mit den Betätigungsmitteln (4) der Patronen (2, 3) verbunden ist, so dass die Drehbewegung der Verbindungswelle (50), die von der Motorachse (M) des Gleichstrommotors (12') mittels des von der Steuerelektronik gesteuerten Encoders angetrieben wird, mit einem ersten Teillauf die Dekompression der Hydraulikleitungen und mit einem zweiten Gesamtlauf die mechanische Freigabe der Patronen (2, 3) betätigt, wobei sie auf jede Patrone unabhängig voneinander einwirkt.

11. Hydraulische Verbindungsbaugruppe (10) nach dem vorstehenden Anspruch, **dadurch gekennzeichnet, dass** die Motorachse (M) des Gleichstrommotors (12') entlang einer im Wesentlichen vertikalen Richtung angeordnet ist, und die Verbindungswelle (50) ebenfalls mit ihrer eigenen Achse (T) vertikal und parallel zur Motorachse (M) angeordnet ist.

12. Hydraulische Verbindungsbaugruppe (10) nach einem oder mehreren der vorstehenden Ansprüche, **dadurch gekennzeichnet, dass** sie einen elektrischen Kontakt oder einen Näherungssensor umfasst, der in Übereinstimmung mit dem Einlassende der Patrone positioniert und so konfiguriert ist, dass er das Vorhandensein des männlichen Verbinders in der Nähe der weiblichen Patrone erkennt und die Patronen automatisch dekomprimiert und freigibt, ohne dass der Bediener den Dekompressions-/Freigabeknopf der Patronen manuell drücken muss.

13. Hydraulische Verbindungsbaugruppe (10) nach einem oder mehreren der vorstehenden Ansprüche, **dadurch gekennzeichnet, dass** die Aktuatoren (11), die die Betätigungsmittel (4) der Patronen steuern, durch eine drahtlose Verbindung über einen in der Kabine oder an einem anderen, vom Verteiler entfernten Punkt angeordneten Druckknopf ferngesteuert werden.

14. Hydraulische Verbindungsbaugruppe (10) nach einem oder mehreren der vorstehenden Ansprüche, **dadurch gekennzeichnet, dass** die Aktuatoren (11), die die Betätigungsmittel (4) der Patronen (2, 3) steuern, automatisch mittels eines Erkennungssystems der korrekten Verbindung eines männlichen Verbinders (401) mit der entsprechenden Patrone (2, 3) betätigt werden, die mindestens einen Radiofrequenzleser/-sender, wie RFID, NFC oder dergleichen, umfasst.

15. Hydraulische Verbindungsbaugruppe (10) nach dem vorstehenden Anspruch, **dadurch gekennzeichnet, dass** sie einen RFID-Leser/-Sender (100) umfasst, der mit dem Verteiler (1) verbunden ist und geeignet ist, das Vorhandensein eines RFID-Tags (500) zu erfassen, das mit einem männlichen Verbinder (401) oder einem Element der Hydraulikleitung (400) verbunden ist, mit der der männliche Verbinder (401) verbunden ist.

16. Hydraulische Verbindungsbaugruppe (10) nach dem vorstehenden Anspruch, **dadurch gekennzeichnet, dass** der RFID-Leser/-Sender (100) in Datenkommunikation mit der Steuerelektronik (200) des Aktuators (12, 12') der elektrobetätigten Aktuatoren (11) steht.

17. Hydraulische Verbindungsbaugruppe (10) nach dem vorstehenden Anspruch, **dadurch gekennzeichnet, dass** der RFID-Leser/-Sender (100) in Datenkommunikation mit der Steuerelektronik (200) des Gleichstrommotors (12') mit einem Encoder steht.

18. Hydraulische Verbindungsbaugruppe (10) nach einem oder mehreren der Ansprüche 15 bis 18, **dadurch gekennzeichnet, dass** das passive Tag (500) Informationen über den männlichen Verbinder (401) und/oder die mit der Hydraulikleitung (400) verbundene Nutzervorrichtung enthält, mit der der Verbinder (401) verbunden ist.

19. Hydraulische Verbindungsbaugruppe (10) nach dem vorstehenden Anspruch, wobei der RFID-Leser/-Sender oberhalb des Verteilers (1) selbst in einem Gehäuse (300) angeordnet ist.

20. Verfahren zur Steuerung einer hydraulischen Verbindungsbaugruppe (10) nach einem oder mehreren der Ansprüche 14 bis 19, umfassend die folgenden Schritte:
- Senden eines Radiofrequenzsignals von dem RFID-Leser/- Sender (100);
- wenn ein passives RFID-Tag (500), das mit einem Verbinder (401) oder mit der Hydraulikleitung (400) verbunden ist, mit der der Verbinder (401) verbunden ist, von dem RFID-Leser/-Sender (100) erfasst und gelesen wird, Mitteilen, von dem RFID-Leser/-Sender (100) an die Steuerelektronik (200) des Aktuators (12') der elektrobetätigten Aktuatoren (11), der Öffnung der Patrone (2, 3), mit der der Bediener den Verbinder (401), der das passive RFID-Tag (500) trägt, verbinden muss.

21. Verfahren nach dem vorstehenden Anspruch, umfassend ferner einen Schritt des Übertragens der in dem passiven RFID-Tag (500) gespeicherten Informationen von dem RFID-Leser/-Sender (100) an eine Steuereinheit der Hydraulikeinheit der Arbeitsmaschine, mit der die hydraulische Verbindungsbaugruppe (10) verbunden ist.

## Revendications

1. Ensemble de connexion hydraulique (10) pour connecter des conduites hydrauliques (20, 30) de fluides sous pression, du type comprenant un collecteur (1) qui loge, dans des sièges correspondants, une pluralité de cartouches femelles (2, 3) et comprenant des moyens d'actionnement (4) des cartouches configurés pour décompresser sélectivement les conduites hydrauliques (20, 30) et connecter/déconnecter lesdites cartouches (2, 3) aux/des coupleurs mâles correspondants (401) prévus sur l'appareil d'utilisation à connecter hydrauliquement audit ensemble (10), **caractérisé en ce qu'**il comprend des actionneurs électro-actionnés (11) pour actionner lesdits moyens d'actionnement (4) des cartouches pour décompresser les conduites hydrauliques (20, 30), dans lequel lesdits actionneurs électro-actionnés (11) déplacent lesdits moyens d'actionnement (4) des cartouches entre une position de repos dans laquelle les cartouches (2, 3) sont dans la configuration appropriée pour retenir les coupleurs mâles correspondants, une première position d'actionnement dans laquelle lesdits moyens d'actionnement (4) des cartouches actionnent au moins une soupape de décompression (21, 31) prévue sur chacune desdites cartouches (2, 3), provoquant la décompression de la conduite hydraulique correspondante (20, 30), et une deuxième position d'actionnement dans laquelle lesdits moyens d'actionnement (4) des cartouches libèrent la connexion mécanique d'au moins une desdites cartouches (2, 3) du coupleur mâle correspondant, afin de faciliter une opération de connexion et de déconnexion desdites cartouches (2,3) aux/des coupleurs mâles correspondants (401), lesdits actionneurs électro-actionnés (11) étant connectés opérationnellement à une unité de commande et comprenant en outre un actionneur électromécanique (12) contrôlé par ladite unité de commande.

2. L'ensemble de connexion hydraulique (10) selon la revendication précédente, **caractérisé en ce que** ladite unité de commande desdits actionneurs électro-actionnés (11) est connectée opérationnellement à un ou plusieurs micro-interrupteurs (13) aptes à contrôler la position dudit actionneur électromécanique (12) et/ou la course d'actionnement desdits moyens d'actionnement (4) des cartouches.

3. L'ensemble de connexion hydraulique (10) selon l'une ou plusieurs des revendications précédentes, **caractérisé par le fait que** lesdits actionneurs électro-actionnés (11) sont connectés opérationnellement à des moyens de commande qui peuvent être actionnés par l'utilisateur.

4. L'ensemble de connexion hydraulique (10) selon l'une ou plusieurs des revendications précédentes, **caractérisé en ce que** lesdits actionneurs électro-actionnés (11) comprennent, en liaison opérationnelle avec ladite unité de commande, une seule extrémité de course pour chacune desdites cartouches (2, 3) de sorte que lesdits moyens d'actionnement (4) des cartouches actionnent simultanément la décompression et la libération mécanique de la cartouche.

5. L'ensemble de connexion hydraulique (10) selon l'une ou plusieurs des revendications précédentes, **caractérisé en ce que** lesdits actionneurs électro-actionnés (11) comprennent, en liaison opérationnelle avec ladite unité de commande, une double fin de course pour chacune desdites cartouches (2, 3) de sorte que lesdits moyens d'actionnement (4) des cartouches actionnent, lors d'une première course, la décompression des conduites hydrauliques, et lors d'une seconde course, le déblocage mécanique de la cartouche.

6. L'ensemble de connexion hydraulique (10) selon les revendications 4 ou 5, **caractérisé par le fait que** ces extrémités comprennent un ou plusieurs micro-interrupteurs (13a, 13b, 13c, 13d, 13e).

7. Ensemble de connection hydraulique (10) selon la revendication 4 ou l'une quelconque des revendications 5 à 6 lorsqu'elles dépendent de la revendication 4,
**caractérisé par le fait que** les moyens de commande actionnés par l'utilisateur desdits actionneurs électro-actionnés (11) comprennent un ou plusieurs boutons-poussoirs placés sur la machine ou directement sur le collecteur (1).

8. Ensemble de connection hydraulique (10) selon la revendication 4 ou l'une quelconque des revendications 5 à 7 lorsqu'elles dépendent de la revendication 4,
**caractérisé en ce que** lesdits moyens de commande actionnés par l'utilisateur comprennent en outre un ou plusieurs boutons-poussoirs ou relais temporisés de sorte qu'une pression courte de ces un ou plusieurs boutons-poussoirs provoque la course réduite de ces actionneurs (11) et la décompression seule des cartouches (2, 3), une pression prolongée du bouton-poussoir provoque la course totale de ces actionneurs (11) et le déblocage mécanique des cartouches (2, 3).

9. L'ensemble de connexion hydraulique (10) selon la revendication 1, **caractérisé en ce que** lesdits actionneurs électro-actionnés (11) comprennent un moteur pas à pas dont le fonctionnement est contrôlé par un système de commande électronique, ou un moteur (12') en courant continu avec un encodeur installé.

10. L'ensemble de connexion hydraulique (10) selon la revendication précédente, **caractérisé en ce que** ledit moteur à courant continu (12') équipé d'un codeur est disposé avec son propre axe moteur (M) parallèle à un arbre de connexion (50) qui est à son tour relié mécaniquement auxdits moyens d'actionnement (4) des cartouches (2, 3) de sorte que le mouvement rotatif de l'arbre de connexion (50), entraîné par l'axe moteur (M) du moteur à courant continu (12') au moyen de l'encodeur contrôlé par l'électronique de commande, actionne, avec une première course partielle, la décompression des conduites hydrauliques et, avec une deuxième course globale, le déverrouillage mécanique des cartouches (2, 3), en agissant sur chaque cartouche indépendamment l'une de l'autre.

11. L'ensemble de connexion hydraulique (10) selon la revendication précédente, **caractérisé en ce que** ledit axe moteur (M) du moteur à courant continu (12') est disposé selon une direction sensiblement verticale, et ledit arbre de connexion (50) est également disposé avec son propre axe (T) vertical et parallèle à l'axe moteur (M).

12. L'ensemble de connexion hydraulique (10) selon l'une ou plusieurs des revendications précédentes, **caractérisé en ce qu'**il comprend un contact électrique ou un capteur de proximité positionné en correspondance avec l'extrémité d'entrée de la cartouche et configuré pour détecter la présence du coupleur mâle à proximité de la cartouche femelle et décompresser et libérer automatiquement les cartouches, sans que l'opérateur n'ait à appuyer manuellement sur le bouton de décompression/déverrouillage des cartouches.

13. L'ensemble de connexion hydraulique (10) selon l'une ou plusieurs des revendications précédentes, **caractérisé en ce que** lesdits actionneurs (11) qui commandent les moyens d'actionnement (4) des cartouches sont commandés à distance par une connexion sans fil à travers un bouton-poussoir placé dans la cabine ou à un autre point éloigné du collecteur.

14. L'ensemble de connexion hydraulique (10) selon l'une ou plusieurs des revendications précédentes, **caractérisé en ce que** lesdits actionneurs (11) qui contrôlent les moyens d'actionnement (4) des cartouches (2, 3) sont automatiquement actionnés au moyen d'un système de reconnaissance de l'accouplement correct d'un coupleur mâle (401) avec la cartouche correspondante (2, 3) comprenant au moins un lecteur/émetteur de radiofréquence, tel que RFID, NFC, ou similaire.

15. L'ensemble de connexion hydraulique (10) selon la revendication précédente, **caractérisé en ce qu'**il comprend un lecteur/émetteur RFID (100) associé audit collecteur (1) et apte à détecter la présence d'une étiquette RFID (500) associée à un coupleur mâle (401) ou à un élément de la ligne hydraulique (400) à laquelle ledit coupleur mâle (401) est associé.

16. L'ensemble de connexion hydraulique (10) selon la revendication précédente, **caractérisé en ce que** ledit lecteur/émetteur RFID (100) est en communication de données avec l'électronique de commande (200) de l'actionneur (12, 12') desdits actionneurs électro-actionnés (11)

17. L'ensemble de connexion hydraulique (10) selon la revendication précédente, **caractérisé en ce que** ledit lecteur/émetteur RFID (100) est en communication de données avec l'électronique de commande (200) dudit moteur à courant continu (12') avec un encodeur.

18. L'ensemble de connexion hydraulique (10) selon une ou plusieurs des revendications 15 à 18, **caractérisé en ce que** ladite étiquette passive (500) contient des informations concernant le coupleur mâle (401) et/ou l'appareil utilisateur connecté à la ligne hydraulique (400) à laquelle ledit coupleur (401) est associé.

19. L'ensemble de connexion hydraulique (10) selon la revendication précédente, dans lequel ledit lecteur/transmetteur RFID est positionné au-dessus du collecteur (1) lui-même à l'intérieur d'un boîtier (300).

20. Méthode de contrôle d'un ensemble de connexion hydraulique (10) selon l'une ou plusieurs des revendications 14 à 19, comprenant les étapes suivantes :
- envoi d'un signal de radiofréquence par ledit lecteur/émetteur RFID (100) ;
- lorsqu'une étiquette RFID passive (500) associée à un couplage (401) ou à la conduite hydraulique (400) à laquelle ledit raccord (401) est associé, est détectée et lue par le lecteur/transmetteur RFID (100), communication par ledit lecteur/transmetteur RFID (100) à l'électronique de commande (200) de l'actionneur (12') desdits actionneurs électro-actionnés (11), de l'ouverture de la cartouche (2, 3) avec laquelle l'opérateur doit accoupler le couplage (401) supportant ladite étiquette RFID passive (500).

21. Le procédé selon la revendication précédente, comprenant en outre une étape de transmission des informations stockées dans l'étiquette RFID passive (500) depuis ledit lecteur/émetteur RFID (100) vers une unité de contrôle de l'unité hydraulique de la machine d'exploitation à laquelle ledit ensemble de connexion hydraulique (10) est associé.
